(19) Europäisches Patentamt
European Patent Office
Office européen des brevets

(11) **EP 2 193 359 B1**

(12) **EUROPÄISCHE PATENTSCHRIFT**

(45) Veröffentlichungstag und Bekanntmachung des Hinweises auf die Patenterteilung:
**04.07.2012 Patentblatt 2012/27**

(21) Anmeldenummer: **09737898.8**

(22) Anmeldetag: **30.04.2009**

(51) Int Cl.:
*G01N 23/04* (2006.01)          *A61B 6/03* (2006.01)
*G06T 11/00* (2006.01)

(86) Internationale Anmeldenummer:
**PCT/EP2009/003149**

(87) Internationale Veröffentlichungsnummer:
**WO 2009/132854 (05.11.2009 Gazette 2009/45)**

(54) **VORRICHTUNG UND VERFAHREN ZUM ERZEUGEN EINER CT-REKONSTRUKTION EINES OBJEKTS MIT EINEM HOCHAUFGELÖSTEN INTERESSIERENDEN OBJEKTBEREICH**

DEVICE AND METHOD FOR CREATING A CT RECONSTRUCTION OF AN OBJECT HAVING A HIGH-RESOLUTION OBJECT REGION OF INTEREST

DISPOSITIF ET PROCÉDÉ POUR PRODUIRE UNE RECONSTRUCTION TOMOGRAPHIQUE D UN OBJET AVEC UNE ZONE D OBJET INTÉRESSANTE EN HAUTE RÉSOLUTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.04.2008 DE 102008021639**

(43) Veröffentlichungstag der Anmeldung:
**09.06.2010 Patentblatt 2010/23**

(73) Patentinhaber: **Fraunhofer-Gesellschaft zur Förderung der angewandten Forschung e.V.
80686 München (DE)**

(72) Erfinder:
• **OECKL, Steven
91052 Erlangen (DE)**
• **FUCHS, Theobald
90429 Nürnberg (DE)**

• **SCHÖN, Tobias
90455 Nürnberg (DE)**

(74) Vertreter: **Zinkler, Franz et al
Schoppe, Zimmermann,
Stöckeler & Zinkler
Patentanwälte
Postfach 246
D-82043 Pullach bei München (DE)**

(56) Entgegenhaltungen:
WO-A-2007/108346          US-A1- 2004 120 451
US-A1- 2006 262 118

• **BONNET S ET AL: "Nonseparable wavelet-based cone-beam reconstruction in 3-d rotational angiography" IEEE TRANSACTIONS ON MEDICAL IMAGING, IEEE SERVICE CENTER, PISCATAWAY, NJ, US, Bd. 22, Nr. 3, 1. März 2003 (2003-03-01), Seiten 360-367, XP011096522 ISSN: 0278-0062**

EP 2 193 359 B1

**Beschreibung**

Ausführungsbeispiele der vorliegenden Erfindung befassen sich mit Möglichkeiten, eine CT-Rekonstruktion eines Objekts zu erzeugen, die in einem besonders interessierenden Objektbereich eine hohe Auflösung aufweist, wobei die Auflösung in anderen, an den interessierenden Objektbereich angrenzenden bzw. diesen umfassenden Objektbereichen geringer ist.

Aus der Patentschrift US-A-2006/0262118 ist ein Verfahren zum Erzeugen einer CT-Rekonstruktion eines Objekts mit einem hochaufgelösten interessierenden Objektbereich bekannt. Dieser interessierende Bereich wird mit einer höheren Zeit- und/oder Ortsauflösung als der Rest des Objekts aufgenommen. Die Bilddaten des interessierenden Objektbereichs, die mit einer hohen Auflösung aufgenommen worden sind, werden dann verwendet, um diesen interessierenden Bereich im Objekt darzustellen.

Bei der zerstörungsfreien Prüfung (ZfP) von Objekten bzw. der Untersuchung von Patienten mittels Röntgencomputertomographie wird die erzielbare Auflösung im Wesentlichen durch zwei Faktoren begrenzt. Dies ist zum einen die endliche Ausdehnung der Strahlungsquelle, d. h. desjenigen Bereichs, von dem die zur Tomographie verwendete Strahlung emittiert wird (beispielsweise der Brennfleck einer Röntgenröhre), zum Anderen die endliche Ausdehnung der Detektorelemente. Bei endlicher Ausdehnung einer dieser beiden Komponenten ist die vielen Rekonstruktionsalgorithmen zugrundeliegende idealisierte Betrachtungsweise eines idealisierten "Röntgenstrahls" infinitesimaler Ausdehnung durch das zu untersuchende Objekt nicht mehr gegeben.

Die zur Abtastung der einzelnen Projektionsbilder im röntgensensitiven Detektor verwendeten Pixel, wie beispielsweise die eines elektronischen Flachbildwandlers (beispielsweise einer CCD mit strahlungskonvertierender Beschichtung oder eines direkt konvertierenden Halbleiterdetektors oder dergleichen), haben selbstverständlich jeweils endlichen Zwischenabstand, wodurch die Auflösung ebenfalls begrenzt wird.

Da dies üblicherweise den praktischen Gegebenheiten entspricht, soll im Folgenden ohne Beschränkung der Allgemeinheit angenommen werden, dass die Ausdehnung der Strahlungsquelle kleiner als die die Begrenzung der Auflösung durch den endlichen Abstand der Detektorpixel verursacht ist.

Um mittels Standardalgorithmen eine Serie von Röntgenprojektionsbildern, also eine Mehrzahl von Aufnahmen, die aus unterschiedlichen Perspektiven mittels eines ausgedehnten ein- oder zweidimensionalen Detektors gewonnen wurde, artefaktfrei rekonstruieren zu können, muss das Objekt in jeder der aufgenommenen Projektionen in horizontaler Ausdehnung vollständig enthalten sein (wenn das Objekt oben und/oder unten über den Detektor hinausragt, dann führt dies nicht zu Artefakten in der Rekonstruktion). Mit anderen Worten muss bei einer dreidimensionalen Rekonstruktion (CT-Rekonstruktion) auf jedem zweidimensionalen Schattenbild (Projektion) das Objekt in horizontaler Ausdehnung vollständig abgebildet sein. Die horizontale Ausdehnung beschreibt daher in diesem Zusammenhang diejenige Orientierung des Objekts, bezüglich derer die Perspektive durch die Rotation verändert wird. In der dazu senkrechten, vertikalen Richtung kann das Objekt unvollständig abgebildet werden. Bei punktförmiger Strahlungsquelle und Detektor mit endlichen Ausmaßen kann folglich das Objekt nicht beliebig weit vom Detektor entfernt positioniert werden, da sonst die geometrische Projektion des Objekts über den Detektor hinausragen würde. Je stärker die Bedingung, das Objekt in jeder Projektion vollständig abzubilden, verletzt wird, desto ausgeprägter sind die durch den Bildrekonstruktionsalgorithmus hervorgerufenen Störungen in den CT-Schnittbildern bzw. in den dreidimensionalen Rekonstruktionen des untersuchten Objekts. Der Artefaktanteil in den rekonstruierten Schichten bzw. Modellen beeinträchtigt somit zunehmend die Aussagekraft der Bilder, bis diese im Extremfall keine verwertbaren Informationen mehr enthalten. Zum einen wird die Auflösung also durch die verwendete Apparatur und dabei insbesondere durch die Auflösung des verwendeten Sensors begrenzt. Zum anderen begrenzt die durch den Bildrekonstruktionsalgorithmus aufgestellte Bedingung der vollständigen Abbildung des Objekts in den einzelnen Projektionen die räumliche Auflösung, da dadurch die durch geometrische Variationen der Abstände zwischen Detektor und Objekt verursachte optische Vergrößerung des zu untersuchenden Objekts auf dem Detektor nach oben begrenzt wird.

Dies ist besonders bei geometrisch ausgedehnten Objekten relevant, wie beispielsweise bei der zerstörungsfreien Materialprüfung von Motoren oder ähnlich großen Bauteilen, bei denen mit der zur Verfügung stehenden Sensorauflösung feine Details nicht mehr aufgelöst werden können, wenn, wie oben beschrieben, das gesamte Objekt in jeder Projektionsansicht auf den Sensor endlicher Größe abgebildet werden muss.

Die Möglichkeit, einen vollständigen Satz von Projektionsdaten in einer vergrößerten Ansicht zu erhalten, indem je Projektion nicht das vollständige Objekt abgebildet wird, existiert nur eingeschränkt, da dann der Bildrekonstruktionsalgorithmus erhebliche Artefakte produziert. Dies begründet sich darin, dass der Bildrekonstruktionsalgorithmus davon lebt, die vollständige Information über das Objekt aus allen Perspektiven zu enthalten. Dies ist jedoch dann nicht der Fall, wenn in den Projektionen der Rand des Objekts jeweils nicht abgebildet wird. Dieser Rand trägt jedoch bei einer um 90° gedrehten Ansicht zum Absorptionskoeffizienten und somit zur gesamten Röntgenabsorption mit bei, so dass der CT-Rekonstruktionsalgorithmus in der Rekonstruktion erhebliche Artefakte produziert, wobei deren Größe mit dem Anteil des am Rand des Objekts nicht abgebildeten Bereiches zunimmt.

Es besteht also die Notwendigkeit, auch bei geometrisch stark ausgedehnten Objekten Teilbereiche eines Objekts vollständig und artefaktfrei mittels CT-Verfahren untersuchen zu können.

Einige Ausführungsbeispiele der vorliegenden Erfindung ermöglichen die detailgenaue CT-Abbildung eines interessierenden Objektbereichs innerhalb eines Objekts, indem zunächst ein erster Projektionsdatensatz des Objekts mit einer ersten, niedrigen Auflösung erzeugt wird und indem danach ein zweiter Projektionsdatensatz, der nur den interessierenden Objektbereich umfasst, mit einer zweiten, höheren Auflösung erfasst wird. Durch Kombination der so gewonnenen ersten und zweiten Projektionsdatensätze gemäß einer Kombinationsregel kann eine CT-Rekonstruktion des ersten Bereichs des Objekts mit der ersten Auflösung erhalten werden, wobei der innerhalb oder am Rand des ersten Bereichs angeordnete interessierende Objektbereich mit der zweiten, höheren Auflösung rekonstruiert werden kann. Dabei ist es insbesondere möglich, durch die zweimalige Erfassung des Objekts, einen vollständigen Datensatz zu rekonstruieren, der frei von Bildartefakten innerhalb des interessierenden Objektbereichs bleibt.

Dabei werden gemäß einigen Ausführungsbeispielen der erste und der zweite Bereich simultan aufgenommen, indem beispielsweise zwei Detektoren unterschiedlicher geometrischer Ausdehnung und Ortsauflösung verwendet werden. Dabei kann der Detektor hoher Auflösung beispielsweise vor dem Detektor niedriger Auflösung angeordnet werden, wobei die von dem Detektor hoher Auflösung abgeschatteten Bereiche des Detektors niedriger Auflösung durch Verwendung der Bilddaten des Detektors hoher Auflösung substituiert werden können, um die fehlenden Daten im Bild des Detektors niedriger Auflösung zu ergänzen.

Bei einigen Ausführungsbeispielen wird das Objekt bewegt bzw. es wird der Abstand zwischen Detektor und Objekt variiert, so dass das Objekt mittels eines Detektors mit unterschiedlichen Vergrößerungsfaktoren aufgenommen werden kann, um durch die nachfolgende Kombination der beiden Projektionsdatensätze die artefaktfrei hochaufgelöste Darstellung des interessierenden Objektbereichs (ROI = "region of interest") zu erhalten.

Ferner kann gemäß einigen Ausführungsbeispielen das Konzept der doppelten Aufnahme bzw. des doppelten Erzeugens von Projektionsdatensätzen unterschiedlicher Auflösung auch in Verbindung mit unterschiedlichen Röntgenquellen bzw. mit Röntgenstrahlung unterschiedlicher Wellenlänge implementiert werden. Da der Absorptionsquerschnitt von Röntgenstrahlung material- und energieabhängig ist, kann maximaler Bildkontrast, je nach untersuchtem Objekt, bei unterschiedlichen Energien der verwendeten Röntgenstrahlung erzielt werden. Enthält das zu untersuchende Objekt also unterschiedliche Materialien können unterschiedliche Röntgenenergien dazu führen, dass die erzielbare Auflösung trotz der unterschiedlichen Absorptionseigenschaften für beide Materialien identisch hoch ist.

Der Begriff Auflösung ist im Kontext dieser Anmeldung bzw. der Erfindung also nicht lediglich als Ortsauflösung zu verstehen, sondern als Begriff, der beschreibt, wie viel Information aus den Daten bzw. den einzelnen Projektionsaufnahmen gewonnen werden kann. Als anschauliches Beispiel mag hier dienen, dass, obwohl ein Detektor mit beliebig hoher Ortsauflösung verwendet wird, die erhaltene Information näherungsweise null ist, wenn Röntgenstrahlung so geringer Energie verwendet wird, dass diese fast vollständig vom Objekt absorbiert wird. Im Extremfall äußerst hoher Röntgenenergie, bei der kaum Absorption stattfindet, gilt dies selbstverständlich ebenfalls.

Werden zwei Projektionsaufnahmen mit jeweils unterschiedlichen Auflösungen angefertigt, ergeben sich unterschiedliche Möglichkeiten bzw. Kombinationsregeln, gemäß derer die beiden Projektionsaufnahmen bzw. die aus mehreren Projektionsaufnahmen bestehenden unterschiedlichen Projektionsdatensätze derart kombiniert werden können, dass sich im interessierenden Objektbereich ein artefaktfreies Bild mit der hohen Auflösung der zweiten Projektionsaufnahme ergibt.

Eine Kombinationsmöglichkeit und eine dazu zugeordnete Kombinationsregel ergeben sich, wenn die Daten in der zweiten Projektionsaufnahme so bearbeitet werden, dass diesen lediglich Information über die hochfrequenten Bildanteile in dem interessierenden Objektbereich entnommen wird. Die niederfrequente Bildinformation (niedrige Ortsfrequenzen) ist bereits in den ersten Projektionsaufnahmen enthalten. Wird diese Vorverarbeitung des zweiten Projektionsdatensatzes so durchgeführt, dass sämtliche Bildinformationen bzw. näherungsweise sämtliche Bildinformationen oberhalb einer Grenzfrequenz, die durch die maximal abbildbare Ortsinformation in den niedriger aufgelösten Bildern des ersten Projektionsdatensatzes definiert ist, enthalten ist, lassen sich beide Projektionsdatensätze durch einfache Addition der entsprechenden Aufnahmen so kombinieren, dass in dem interessierenden Objektbereich die Auflösung der zweiten Projektionsaufnahmen zur Verfügung steht, ohne dass durch das getrennte Vorprozessieren Artefakte oder ähnliche Bildstörungen entstehen.

Bei einigen Ausführungsbeispielen wird eine Vortransformation für die zweiten Projektionsaufnahmen verwendet, um diejenigen, dem interessierenden Objektbereich zugeordneten höherfrequenten Bildanteile zu extrahieren, die im rückprojizierten Bild einer Wavelet-Zerlegung der Aufnahme entsprechen. Durch die Eigenschaft der Orts- und Frequenzlokalität der Wavelet-Basisfunktionen kann obiges Kriterium sichergestellt werden. Das heißt, die Darstellung bzw. Wavelet-Zerlegung kann so gewählt werden, dass die Wavelets lediglich im interessierenden Objektbereich zur Rekonstruktion beitragen, dort jedoch die relevante Information, nämlich die hochfrequenten Bildanteile, beschreiben. Auf diese Art und Weise können Kombinationsaufnahmen erhalten werden, die im interessierenden Objektbereich die gewünschte hohe Auflösung artefaktfrei liefert. Dabei können insbesondere die hochfrequenten und die niederfrequenten Bildanteile getrennt prozessiert und rekonstruiert werden, wobei eine Kombination der Darstellungen nach der Rekonstruktion durch Addition erfolgen kann.

Eine Rückschluss von der zu erzielenden Wavelet-Darstellung der rekonstruierten Aufnahmen auf die Filter bzw. Operationen einer Vortransformation, die auf die einzelnen Projektionsaufnahmen anzuwenden sind, sind für den Fachmann ohne weiteres möglich.

Einige spezielle Ausführungsbeispiele der vorliegenden Erfindung werden in den nachfolgenden Absätzen anhand der beigefügten Figuren eingehender erläutert. Dabei zeigen:

Fig. 1    ein Setup eines CT-Systems;

Fig. 2    schematisch das Erzeugen zweier Projektionsdatensätze unterschiedlicher Auflösung;

Fig. 3    schematisch eine alternative Möglichkeit zur gleichzeitigen Erzeugung zweier Projektionsdatensätze unterschiedlicher Auflösung;

Fig. 4    ein Ausführungsbeispiel einer Kombinationsregel zum Kombinieren der Projektionsaufnahmen unterschiedlicher Auflösung, um eine CT-Rekonstruktion des interessierenden Objektbereichs zu erhalten;

Fig. 5    ein alternatives Ausführungsbeispiel einer Kombinationsregel, um eine CT-Rekonstruktion aus zwei Projektionsdatensätzen unterschiedlicher Auflösung zu erhalten;

Fig. 6    ein weiteres Ausführungsbeispiel einer Kombinationsregel, um eine CT-Rekonstruktion aus zwei Projektionsdatensätzen unterschiedlicher Auflösung zu erhalten; und

Fig. 7    ein weiteres Ausführungsbeispiel einer Kombinationsregel.

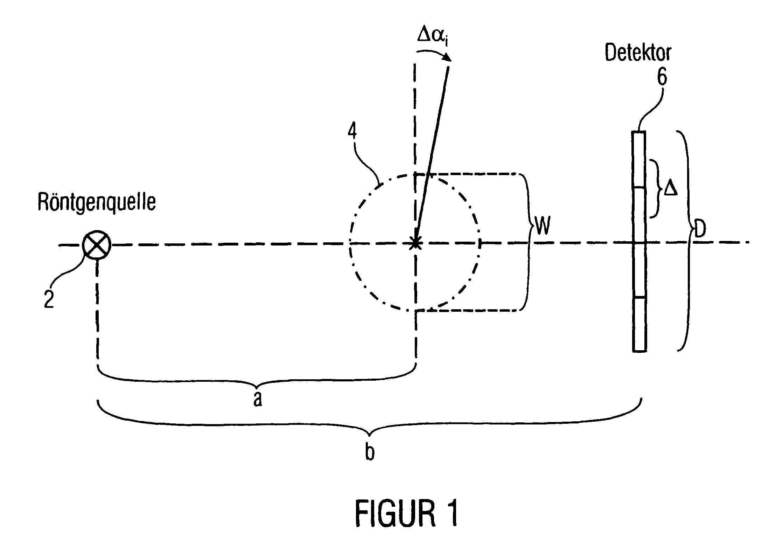

Fig. 1 zeigt schematisch die grundlegenden Elemente und deren relative Anordnung eines CT-Messaufbaus, deren Verständnis zur folgenden Diskussion einiger Ausführungsbeispiele der Erfindung erforderlich ist. Dabei zeigt Fig. 1 eine (idealisiert) als punktförmig angenommene Röntgenquelle 2, mittels derer ein innerhalb eines Messfeldes 4 angeordnetes Objekt auf einen Detektor 6 abgebildet wird. Die, bei punktförmiger Röntgenquelle 2, die erzielbare Ortsauflösung begrenzenden Faktoren sind der Abstand b der Röntgenquelle 2 zum Detektor 6, der Abstand a der Röntgenquelle 2 zum Zentrum (Position der Drehachse) des Messfeldes 4, die Größe des Objekts W (hier angenommen als Durchmesser des Messfeldes), sowie der Abstand $\Delta$ zweier benachbarter Pixel bzw. Detektorelemente des Detektors 6, dessen gesamte geometrische Ausdehnung in der betrachteten Dimension D betragen soll.

Wie bereits oben beschrieben, sollte für die Anwendung von Standard-CT-Bildrekonstruktionsverfahren das Objekt (in diesem Fall ersetzt durch die räumliche Ausdehnung W des Messfeldes 4) in horizontaler Ausdehnung vollständig in den einzelnen Projektionsaufnahmen des Detektors 6 enthalten sein. Ein Projektionsdatensatz bestehend aus mehreren Projektionsaufnahmen wird üblicherweise dadurch gewonnen, dass entweder das Objekt bzw. das Messfeld 4 relativ zur Anordnung von Röntgenquelle 2 und Detektor 6 rotiert wird, wobei die Winkelinkremente $\Delta\alpha_i$ der Rotation im Prinzip frei gewählt werden können, wie es weiter unten noch ausgeführt werden wird. Alternativ kann, wie beispielsweise bei einem Computertomographen zur Verwendung in der Humanmedizin, die Röntgenquelle 2 und der Detektor 6 um das Rotationszentrum (Zentrum des Messfeldes 4) rotiert werden. Wird obige Forderung nach vollständiger Abbildung des Objekts in den Projektionen erfüllt, bedeutet dies, dass eine effektive Ortsauflösung $\Delta_{effektiv}$ von der Größe des Objekts und damit von der maximal einsetzbaren Vergrößerung abhängt, da die effektive Abtastung (innerhalb des Objekts) durch einen Detektor (Pixelabstand $\Delta$) reziprok mit dem Vergrößerungsfaktor kleiner wird:

$$\Delta_{effektiv} = \Delta/M \qquad\qquad (1)$$

Der Vergrößerungsfaktor M ist dabei gegeben durch die Abstände der Drehachse (auf der üblicherweise das Objekt mittig gelagert wird) vom Detektor bzw. von der Quelle

$$M = \frac{b}{a}, \qquad\qquad (2)$$

Mit b als dem Abstand der Quelle zum Detektor und a als dem Abstand der Quelle zum Drehmittelpunkt.

Es sei W der Durchmesser des Messfeldes und damit die maximale Objektgröße, die garantiert, dass jede Projektion vollständig auf dem Detektor abgebildet wird. Die Obergrenze für die Vergrößerung folgt hieraus als

$$M_{max} = \frac{D}{W}, \qquad\qquad (3)$$

mit D als die Breite der Eingangsfläche des Detektors, die typischerweise durch die Bauart des in dem CT-System installierten Flachbildwandlers festgelegt ist und nicht an unterschiedliche Problemstellungen angepasst werden kann.

Für einen Flachbildwandler mit $N_D$ Detektorelementen pro Spalte oder Zeile (wobei die Gültigkeit dieser Überlegung nicht auf quadratische Detektoren beschränkt ist) gilt:

$$D = N_D \cdot \Delta \qquad\qquad (4)$$

und somit

$$\Delta_{effektiv,min} = \Delta / M_{max} = \frac{W}{N_D} \qquad\qquad (5)$$

Das heißt, dass bei vollständiger Abbildung des Objekts im oben beschriebenen Sinn selbst bei ausreichend kleinem Brennfleck die Auflösung effektiv durch $W/N_D$ begrenzt ist. Zum Beispiel lässt sich ein zylindrisches Gussteil mit 200 mm Durchmesser unter Verwendung eines 1.024-spaltigem Detektor nicht besser als mit ca. 195 $\mu$m Auflösung in den Schnittebenen abbilden.

Das Wählen eines so großen Vergrößerungsfaktors, dass für jede Projektion lediglich ein innerer Teilbereich eines Objekts innerhalb des Messfeldes 4, dafür jedoch mit größerer Vergrößerung, aufgenommen wird, ist aufgrund der vorhergehenden Überlegungen unmöglich, da dies zu starken Bildartefakten führen würde, die im Extremfall eine sinnvolle Interpretation der Aufnahmen nicht mehr möglich machen.

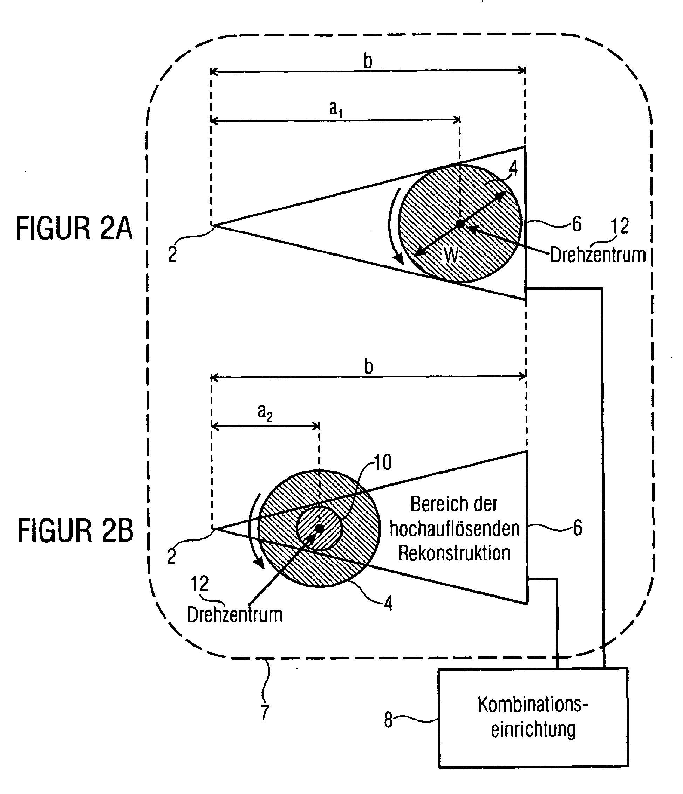

Fig. 2 zeigt ein Ausführungsbeispiel der Erfindung, bei dem ein erster Projektionsdatensatz mit einer ersten, einen interessierenden Objektbereich umfassenden Bereich des Objekts mit einer ersten Auflösung erzeugt wird, während ein zweiter Projektionsdatensatz für den interessierenden Objektbereich mit einer zweiten, höheren Auflösung erzeugt wird. Dies ermöglicht es, die beiden Projektionsdatensätze mittels einer geeigneten Kombinationsregel zu kombinieren, um zu einer CT-Rekonstruktion des Objekts bzw. des interessierenden Teils des Objekts zu gelangen, die im interessierenden Objektbereich hochaufgelöst ist, ohne Artefakte aufzuweisen.

Fig. 2 bedient sich dabei derselben Symbole und Terminologie wie in Fig. 1 bereits eingeführt, so dass auf eine erneute Erläuterung der entsprechenden Komponenten verzichtet werden kann.

Generell gilt, dass im Kontext dieser Beschreibung funktionsgleiche oder funktionsähnliche Elemente mit denselben Bezugszeichen versehen sind, wobei deren Beschreibung anhand der einzelnen Figuren wechselseitig aufeinander anwendbar ist.

Fig. 2a zeigt die Situation, wie mittels ein und desselben Detektors 6 zunächst ein Projektionsdatensatz des gesamten Objekts (Messfeldes) 4 erzeugt wird, wobei dieser Projektionsdatensatz eine erste Auflösung aufweist, die durch die oben beschriebenen geometrischen Verhältnisse bestimmt ist.

Fig. 2b illustriert, wie ein zweiter Projektionsdatensatz mit demselben Detektor 6 für einen interessierenden Objektbereich 10, der hier ohne Beschränkung der Allgemeinheit im Zentrum des Messfeldes 4 angeordnet ist, gewonnen werden kann. Alternative Ausführungsbeispiele bzw. alternative Anwendungen des Konzepts können selbstverständlich auch interessierende Objektbereiche hochaufgelöst abbilden, die sich nicht im Zentrum der Rotation befinden.

Wie in Fig. 2b dargestellt, wird zur Änderung des Vergrößerungsfaktors der Abstand zwischen Objekt 4 (bzw. zwischen dem Zentrum der Rotation 12) und Detektor 6 variiert. Dazu kann beispielsweise der Detektor vom Objekt weg bzw. darauf zu bewegt werden, um die Vergrößerung zu verändern. Diese entspricht im Übertragenen Sinn einem Detektor bzw. zwei getrennten Detektoren, wie sie weiter unten beschrieben werden und die einen hochauflösenden Bereich innerhalb eines niedrigauflösenden Bereiches aufweisen.

Der Detektor ist mit einer Kombinationseinrichtung 8 verbunden, die es ermöglicht, die Projektionsdatensätze, wie weiter unten ausgeführt, zu kombinieren.

Mit anderen Worten zeigen die Fig. 2a und 2b eine zweimalige Messung desselben Objekts mit unterschiedlichen Vergrößerungsfaktoren, um eine hochaufgelöste Rekonstruktion ohne Artefakte innerhalb eines interessierenden Objektbereichs 10 zu ermöglichen. Bei der ersten Messung wird die Vergrößerung so gewählt, dass das Objekt vollständig in allen Projektionen abgebildet und artefaktfrei mit einer ersten Auflösung rekonstruiert werden kann. Die zweite Messung wird mit einem Vergrößerungsfaktor durchgeführt, der anhand der erwünschten zu erzielenden Auflösung gewählt werden kann, ohne dass dabei auf eine vollständige Erfassung des gesamten Objekts Rücksicht genommen werden muss.

Die Figuren 2a und 2b zeigen somit zwei mögliche Betriebsarten einer Erfassungseinrichtung 7, die es ermöglicht einen ersten Projektionsdatensatz mit einer ersten Auflösung und eine zweiten Projektionsdatensatz mit einer zweiten, höheren Auflösung, zu erzeugen.

Die Kombinationseinrichtung 8 erlaubt, den ersten und den zweiten Projektionsdatensatz gemäß einer Kombinationsregel zu kombinieren, um eine CT-Rekonstruktion des ersten Bereichs 4 des Objekts mit der ersten Auflösung und des interessierenden Objektbereichs 10 mit der zweiten, höheren Auflösung zu erhalten.

Beide Datensätze lassen sich durch geeignete Mittel so kombinieren, dass in dem interessierenden Objektbereich (ROI = region of interest), hier beispielsweise der zentrale Bereich, die gewünschte Auflösung erzielt wird, ohne dass die Bildqualität im Volumendatensatz, welcher das gesamte Objekt repräsentiert, nach der CT-Rekonstruktion aus der Unvollständigkeit der Daten resultierende Artefakte aufweist.

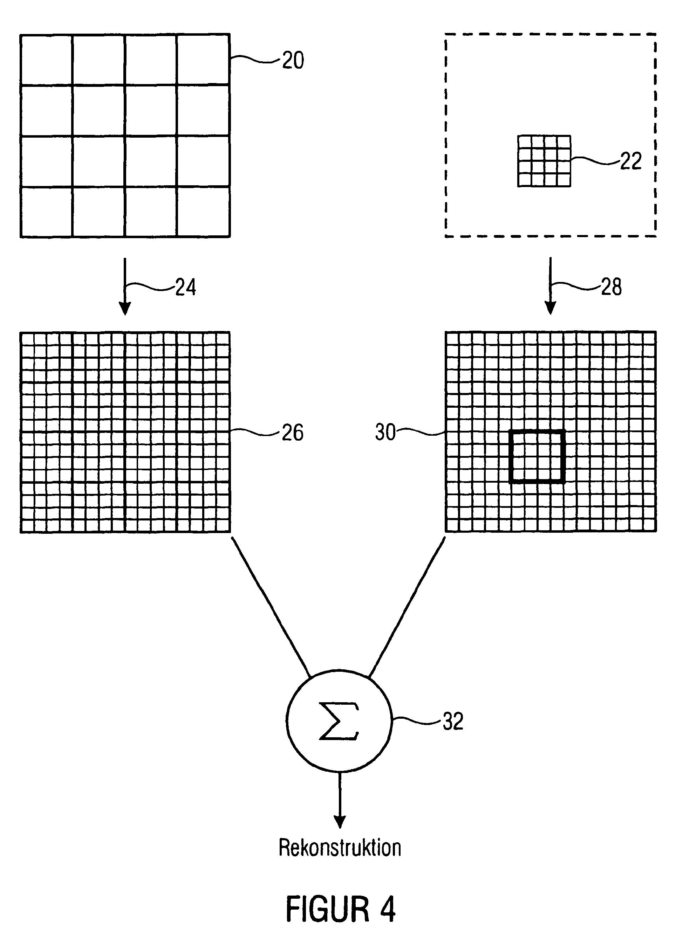

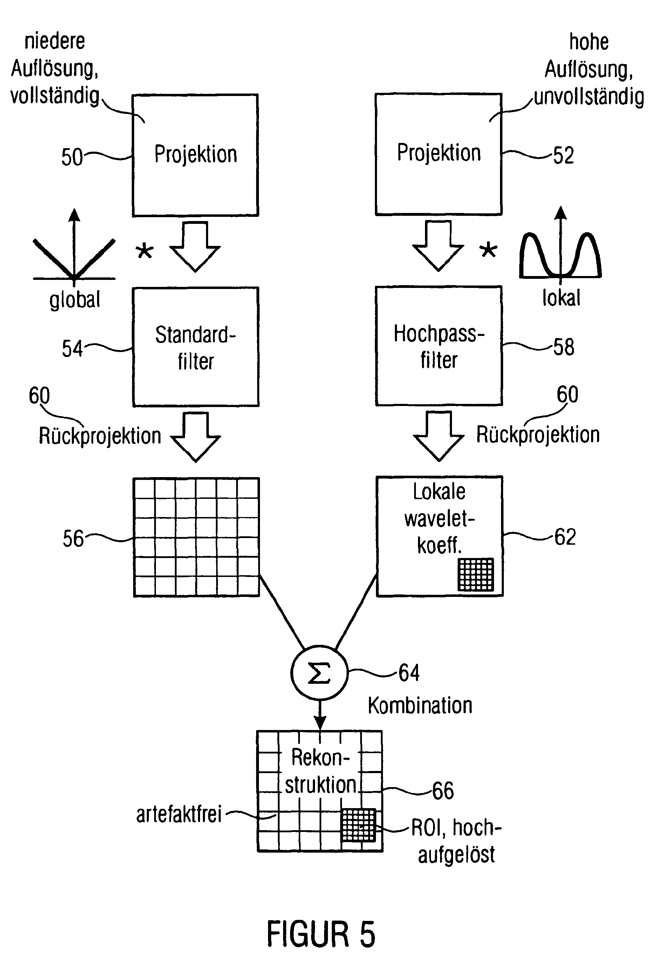

Ausführungsbeispiele geeigneter Kombinationen bzw. geeigneter Kombinationsregeln (Mitteln zum Kombinieren) werden nachfolgend anhand der Fig. 4 und 5 noch eingehender erläutert werden.

Bei dem in den Figuren 2a und 2b vorgeschlagenen Vorgehen ergibt sich hinsichtlich der Winkelinkremente, in denen die Rotation durchgeführt wird, auch die Möglichkeit, durch geschickte Wahl derselben, die Anzahl der erforderlichen Projektionen bezüglich der Auflösung zu optimieren und somit die Effizienz zu erhöhen und Messzeit zu sparen.

Das heißt, bei einem durch das zur Verfügung stehende CT-System vorgegebenen Flachbildwandler vorbestimmter Größe ist der vom Benutzer wählbare Parameter für die Anzahl der Winkelpositionen auf dem Vollkreis, aus denen Projektionsbilder akquiriert werden, wählbar.

Die radiale Abtastung im Abstand $R_M$ vom Drehzentrum 12 ergibt sich bei einem angenommenen Winkelinkrement von $\Delta\alpha$ direkt aus der Bogenlänge:

$$\Delta_r = R_M \cdot \Delta\alpha \qquad\qquad (6)$$

Das Winkelinkrement folgt direkt aus der Anzahl der Winkelpositionen auf dem Vollkreis:

$$\Delta\alpha = \frac{2\pi}{N_\alpha} \qquad\qquad (7)$$

Setzt man die radiale Abtastung am Rande des Messfeldes (dem maximalen Abstand zweier Strahlen in aufeinanderfolgenden Projektionen) dem Abtastabstand $\Delta_{effektiv}$ innerhalb der Projektion aus (1) gleich, ergibt sich für die Zahl der Projektionswinkel:

$$\frac{D}{N_D \cdot M} = P_M \cdot \frac{2\pi}{N_\alpha} \qquad\qquad (8)$$

oder

$$N_\alpha = N_D \cdot \frac{W \cdot \pi}{D} M \ . \qquad (9)$$

Im einfachsten Fall wird die Zahl der akquirierten Projektionen bei beiden im Vorangegangenen beschriebenen Messungen gleich sein. Um jedoch die Gesamtzeit für beide Messungen zu reduzieren und somit die Prüfleistung eines gemäß dieser Erfindung konzipierten Computertomographiesystems zu erhöhen, kann die Projektionszahl bei der ersten Messung (welche das Objekt vollständig abbildet) so weit reduziert werden, dass nur innerhalb des mit hoher Auflösung zu rekonstruierenden Teilbereichs die Mindestanforderungen für die Winkelabtastuhg erfüllt werden.

Das heißt, der Tatsache, dass man lediglich an der Bildinformation innerhalb des interessierenden Objektbereichs interessiert ist, kann zusätzlich dadurch Rechnung getragen werden, dass auch in der niedriger aufgelösten Aufnahme nur für den interessierenden Objektbereich die Information mit der, angesichts der reduzierten Auflösung, maximal möglichen Auflösung aufgezeichnet werden.

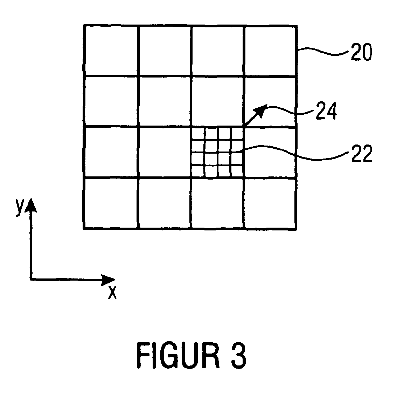

Fig. 3 zeigt ein alternatives Ausführungsbeispiel zum gleichzeitigen Erzeugen eines ersten Projektionsdatensatzes und eines zweiten Projektionsdatensatzes mittels zweier unterschiedlicher Detektoren unterschiedlicher Auflösung. Aus Gründen der Übersichtlichkeit ist hier lediglich die schematische, zweidimensionale Aufsicht eines ersten Detektors 20 und eines zweiten Detektors 22 dargestellt.

Der erste Detektor 20, der eine geringere Ortsauflösung besitzt, kann z.B. vor oder hinter dem zweiten Detektor 22 der höheren Ortsauflösung angeordnet sein. Sofern es für die Bildrekonstruktion bzw. die Kombination der Bilder erforderlich ist, kann dann ohne weiteres die von dem zweiten Detektor 22 durch Abschattung auf den Projektionsaufnahmen des ersten Detektors 20 fehlende Bildinformation durch die Bildinformation des zweiten Detektors 22 substituiert werden. Ein Beispiel für eine solche Substitution wäre etwa, die Intensitäten der hochaufgelösten Pixel gewichtet zu summieren oder anderweitig zu kombinieren, um zu einem Intensitätswert zu gelangen, der einem Detektorpixel des ersten Detektors 20 entspricht.

Die hier exemplarische gezeigte Anordnung ist dabei nicht auf quadratische Geometrien beschränkt, vielmehr sind sämtliche Detektorformen beliebig miteinander kombinierbar. Auch kann der zweite Detektor 22 so angeordnet sein, dass dieser nicht eine geradzahlige Anzahl von Pixeln des ersten Detektors 20 vollständig überdeckt, wie hier der Einfachheit halber angedeutet.

Ferner kann gemäß einigen Ausführungsbeispielen der zweite Detektor 22 relativ zum ersten Detektor 20 beweglich angeordnet sein, wie hier beispielsweise durch einen Richtungspfeil 24 angedeutet, so dass der zweite Detektor 22 in zwei Dimensionen (x- und y-Richtung) relativ zum ersten Detektor 20 bewegt werden kann. Dies kann bei Setups, die nicht vollständig rotationssymmetrisch sind, bei denen also der zweite Detektor 22, wie hier bereits gezeigt, nicht im Zentrum des ersten Detektors 20 angeordnet ist, dazu verwendet werden, den zweiten Detektor bei Rotation des Objekts der Region of Interest bzw. dem interessierenden Objektbereich nachzuführen. Ferner kann der 2. Detektor 22 auch in 3 Dimensionen beweglich sein, um so zusätzlich die effektive Auflösung des 2. Detektors 22 unabhängig vom 1. Detektor 20 variieren zu können.

Zusätzlich wirkt ein zweiter Detektor vor einem ersten Detektor wie ein Vorfilter für die Röntgenstrahlung und sorgt bei einer konstanten Röhrenspannung bzw. Röntgenenergie dafür, dass sich die Strahlenqualitäten und damit der Kontrast, mit dem unterschiedliche Materialien abgebildet werden, zwischen den beiden Projektionen unterschiedlicher Ortsauflösung unterscheiden. Dadurch kann zusätzlich ein Zwei-Spektren-Datensatz aufgezeichnet werden, der mit den bekannten Methoden zur Materialanalyse ausgewertet werden kann.

Fig. 4 zeigt ein erstes Beispiel einer Kombinationsregel, die verwendet werden kann, um CT-Rekonstruktionen eines Objekts zu erhalten, in denen ein interessierender Objektbereich mit hoher Auflösung abgebildet wird, ohne Artefakte zu erzeugen. Die Darstellung in Fig. 4 greift dabei die Detektoren 20 und 22 schematisch auf, wie sie in Fig. 3 eingeführt wurden. Dabei wird mittels des ersten Detektors 20 eine erste Projektionsaufnahme mit einer ersten, niedrigen Auflösung erzeugt und mit dem zweiten Detektor 22 eine zweite Projektionsaufnahme mit einer zweiten, höheren Auflösung. Die einzelnen Projektionsaufnahmen des Objekts aus derselben Perspektive können, wie in Fig. 4 angedeutet, kombiniert werden, bevor sie einem Standard-CT-Bildalgorithmus übergeben werden. Dazu wird, wie es in Fig. 4 dargestellt ist, die erste Projektionsaufnahme des ersten Detektors 20 mit der Auflösung des zweiten Detektors 22 neu abgetastet. Dies kann in einem Schritt der Neuabtastung 24 erfolgen. Die Bildinformationen mit der höheren Auflösung können dabei beispielsweise durch Interpolationstechniken aus den Bildinformationen der ersten Projektionsaufnahme des ersten Detektors 20 erzeugt werden, um ein erstes Zwischenbild 26 zu erzeugen.

Alternativ oder zusätzlich kann, wie es durch den Ergänzungsschritt 28 angedeutet ist, ein zweites Zwischenbild 30 aus der zweiten Projektionsaufnahme erzeugt werden, indem Bildinformationen außerhalb des direkt mittels des zweiten Detektors 22 aufgenommenen interessierenden Objektbereichs mit einer zur Auflösung des zweiten Detektors 22 korrespondierenden Auflösung ergänzt wird. Die zur Ergänzung erforderlichen Bildinformationen zur Erzeugung des zweiten Zwischenbildes können dabei aus den Bildinformationen der ersten Projektionsaufnahme 20 gewonnen werden. In beiden Fällen ist es zur Erzeugung des Zwischenbildes (drittes Zwischenbild), welches einem Standard-CT-Algorithmus übergeben werden kann, erforderlich, die erste Projektionsaufnahme 20 und die zweite Projektionsaufnahme 22 geeignet zu kombinieren. Dies kann, sofern das erste Zwischenbild 26 direkt mit der zweiten Projektionsaufnahme 22 kombiniert wird, beispielsweise durch eine Summation 32 geschehen. Dabei kann alternativ auch die Bildinformation, die bereits in der zweiten Projektionsaufnahme 22 enthalten ist, aus der interpolierten Zwischenbilddarstellung 26 der ersten Projektionsaufnahme vor der Summation vollständig entfernt werden, so dass es zu keiner intensitätsmäßigen "Überbelichtung" des betreffenden Bildbereiches kommt.

Mit anderen Worten zeigt Fig. 4 eine mit Methode zur Kombination der beiden Datensätze, indem die in der hochauflösenden Messung fehlenden Daten in den Bereichen der fehlenden Information durch die vollständigen Daten aus der komplementären Messung ergänzt werden. Dabei muss lediglich eine entsprechende Umskalierung der vollständigen Daten auf ein feineres Abtastraster durchgeführt werden, wobei die Dichten der abgetasteten Projektionswerte im gleichen Verhältnis wie die Vergrößerungsfaktoren stehen. Die hochaufgelösten Projektionen werden am Rand des realen Bildes durch virtuelle Detektorspalten ergänzt, deren Einträge aus den vollständigen Daten unter dem entsprechenden Sichtwinkel bezüglich des Strahls durch das Drehzentrum entnommen werden.

Fig. 5 illustriert eine alternative Möglichkeit der Kombination, also eine alternative Implementierung einer Kombinationsregel, um den ersten Projektionsdatensatz und den zweiten Projektionsdatensatz bzw. die innerhalb der Datensatzes enthaltenen Informationen zu kombinieren, um eine direkte Rekonstruktion von hochauflösenden Bilddaten im vergrößert gemessenen Teilbereich des Objekts zu erhalten.

Dabei kann eine Rückprojektion des Projektionsdatensatzes 50 mit der ersten, niedrigen Auflösung zunächst getrennt von einer Rückprojektion des zweiten Projektionsdatensatzes 52 der zweiten, höheren Auflösung durchgeführt werden. Vorausgesetzt, in dem ersten Projektionsdatensatz 50 wird das Objekt mit dem interessierenden Objektbereich vollständig abgebildet, kann eine CT-Rekonstruktion des ersten Projektionsdatensatzes mit herkömmlichen CT-Bildrekonstruktionsalgorithmen vorgenommen werden. Diese beinhalten beispielsweise das Anwenden global wirkender Filter auf die einzelnen Projektionsaufnahmen, um gefilterte Projektionsaufnahmen 54 zu erhalten. Mittels der Rückprojektion der gefilterten Projektionsaufnahmen kann eine niedrig aufgelöste CT-Rekonstruktion 56 der Daten erfolgen. Unabhängig davon kann, basierend auf dem zweiten Projektionsdatensatz 52 der höheren Auflösung, eine Filterung der diesem Datensatz zugeordneten Projektionsaufnahmen mit einem orts- und frequenzlokalen Filter (beispielsweise korrespondierend zu einer Wavelet-Zerlegung) vorgenommen werden, um eine hochfrequenzgefilterte Repräsentation der Projektionsaufnahmen der höheren Auflösung 58 zu erhalten.

Durch die Rückprojektion 60 wird dann eine Zwischen-CT-Rekonstruktion des Objekts in dem interessierenden Objektbereich erzeugt, die lediglich Informationen über hochfrequente Bildanteile enthält (Zwischen-Rückprojektion bzw. Zwischen-Rekonstruktion 62). Enthält die Zwischen-CT-Rekonstruktion lediglich Bildanteile einer Frequenz, die oberhalb einer durch die endliche Auflösung der ersten Projektionsaufnahmen definierte Grenzfrequenz liegt, können die getrennt voneinander erzeugten Zwischen-CT-Rekonstruktionen 56 und 62 mittels eines Kombinierers 64 kombiniert werden, um nach dem so erfolgten Kombinations-Schritt eine CT-Rekonstruktion 66 des Objekts zu erhalten, in der der interessierende Objektbereich mit der zweiten, höheren Auflösung enthalten ist, ohne dass durch die Bildrekonstruktion Bildartefakte erzeugt wurden. Während der Kombination von 56 und 62 wird gegebenenfalls 56 mit einem Operator behandelt, der zu den auf der Projektion angewandten Filtern für die Rekonstruktion der tieffrequenten Anteile assoziiert ist, und 62 wird mit einem Operator behandelt, der mit den auf der Projektion angewandten Filtern für die Rekonstruktion der hochfrequenten Anteile assoziiert ist, bevor die beiden so vorprozessierten Zwischen-CT-Rekonstruktionen addiert werden.

Mit anderen Worten zeigt Fig. 5 ein Beispiel einer direkten Methode zur Rekonstruktion von hochauflösenden Bilddaten im vergrößert gemessenen Teilbereich des Objekts durch Anwendung einer wavelet-basierten Rekonstruktion. Dabei wird die Eigenschaft der Wavelet-Koeffizienten ausgenutzt, dass diese sowohl im Ortsraum als auch im Frequenzraum lokal sind, also nur zu einem begrenzten Frequenz- sowie räumlichen Abschnitt im Bild beitragen. Daher können bei einer Wavelet-Rekonstruktion des vollständigen Datensatzes im zentralen Bereich des Objekts zwanglos die hochfrequenten Beiträge aus dem hochauflösenden Datensatz ergänzt werden, so dass in einem Zug das Objekt frei von durch Unvollständigkeit der Projektionen induzierte Artefakte, sowie im zentralen Teilbereich mit der erwünschten Auflösung, rekonstruiert werden kann.

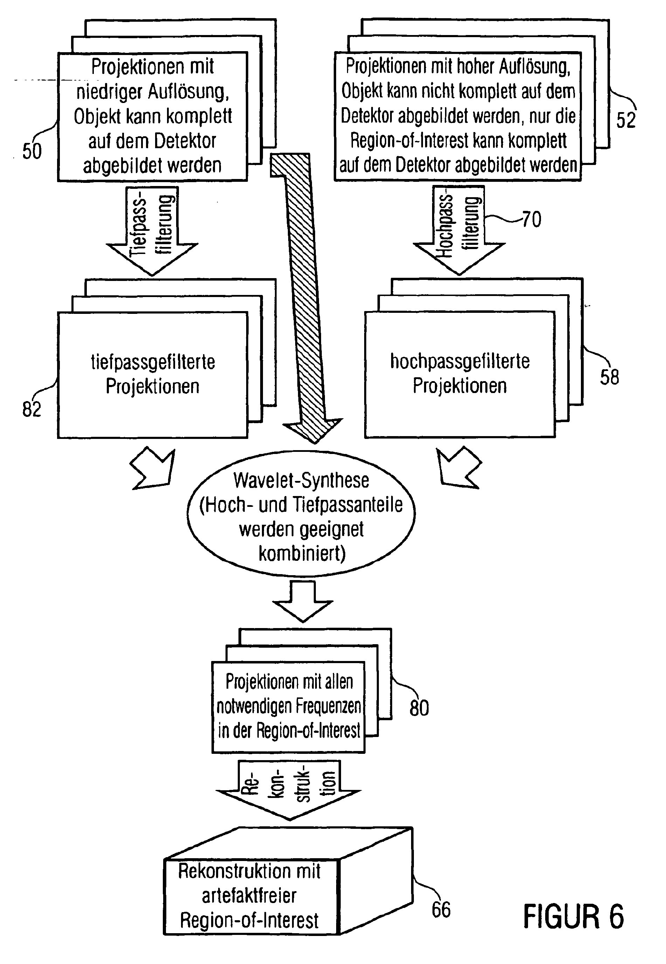

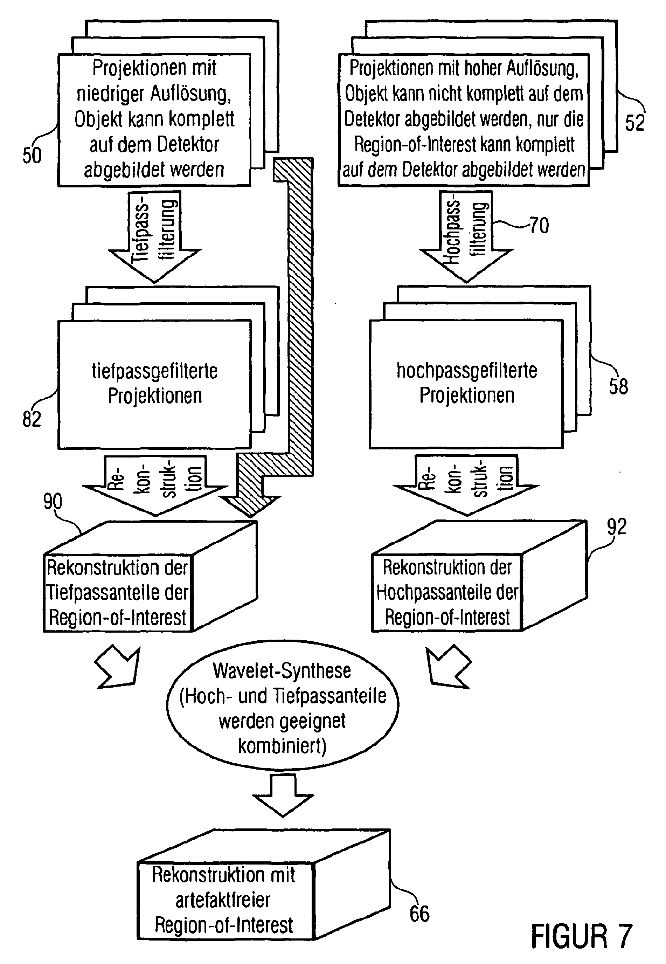

Die Fig. 6 und 7 illustrieren zwei alternative Möglichkeiten, wie erfindungsgemäß eine 3-D Rekonstruktion, also eine CT-Rekonstruktion eines Objekts inklusive des hoch aufzulösenden interessierenden Objektbereichs erzeugt werden kann. Dabei kann die Kombination der Projektionsdatensätze unterschiedlicher Auflösung zum einen vor der eigentlichen CT-Rekonstruktion vorgenommen werden (Fig. 6). Zum anderen kann eine getrennte CT-Rekonstruktion basierend auf dem ersten und dem vortransformierten zweiten Projektionsdatensatz vorgenommen werden, bevor die beiden so erhaltenen intermediären CT-Rekonstruktionen kombiniert werden, um die endgültige CT-Rekonstruktion des Objekts zu erhalten.

Bei der CT-Rekonstruktion können dabei beliebige CT-Rekonstruktionsalgorithmen verwendet werden, wie sie bislang bekannt oder in Zukunft entwickelt werden.

Fig. 6 zeigt dabei ein Beispiel, wie durch Kombination der Projektionsdatensätze vor der eigentlichen CT-Rekonstruktion eine CT-Rekonstruktion des Objekts erhalten werden kann, die im interessierenden Objektbereich eine hohe Ortsauflösung aufweist. Dabei wird zunächst ein erster Projektionsdatensatz 50 des Objekts angefertigt, der mindestens eine erste Projektionsaufnahme mit einer ersten Auflösung umfasst. Zusätzlich wird vorher, gleichzeitig oder später ein zweiter Projektionsdatensatz 52 für den interessierenden Objektbereich erstellt, der mindestens eine zweite Projektionsaufnahme einer zweiten, höheren Auflösung (als die Auflösung des ersten Projektionsdatensatzes) aufweist. Somit enthalten die Projektionsaufnahmen des ersten Projektionsdatensatzes mit der niederen Auflösung Ortsfrequenzen bzw. Bildfrequenzen, bis zu einer durch die Auflösung limitierten vorbestimmten Grenzfrequenz. Die Projektionsaufnahmen des zweiten Projektionsdatensatzes enthalten aufgrund der höheren Ortsauflösung auch Ortsfrequenzen bzw. Bildfrequenzen oberhalb dieser Grenzfrequenz.

In einem Schritt der Vortransformation 70 wird der zweite Projektionsdatensatz bzw. die Projektionsaufnahme des zweiten Projektionsdatensatzes vortransformiert, um einen vortransformierten zweiten Projektionsdatensatz 58 zu erhalten, der lediglich Bildfrequenzen oberhalb einer vorbestimmten Frequenz aufweist. Diese Frequenz kann dabei beispielsweise die Grenzfrequenz des ersten Projektionsdatensatzes, aber auch eine andere Frequenz sein, die auf die Grenzfrequenz angepasst bzw. auf diese abgestimmt ist. Die Vortransformation kann dabei beispielsweise eine Hochpassfilterung sein. Beliebige andere Vortransformationen sind jedoch ebenfalls anwendbar, die dazu führen, dass lediglich Bildfrequenzen oberhalb einer vorbestimmten Grenzfrequenz in dem vortransformierten zweiten Projektionsdatensatz enthalten sind. Lediglich in dem zweiten Projektionsdatensatz enthalten bedeutet dabei selbstverständlich auch, dass die niederen Frequenzen nicht vollständig entfernt sein müssen, sondern dass es auch ausreicht, diese bezüglich der hochfrequenten Bildanteile zu unterdrücken.

Parallel dazu kann optional der erste Projektionsdatensatz einer Tiefpassfilterung unterzogen werden, die an die Grenzfrequenz der Hochpassfilterung des zweiten Projektionsdatensatzes angepasst ist. Alternativ kann diese Tiefpassfilterung jedoch auch entfallen, da die Daten des ersten Projektionsdatensatzes aufgrund der endlichen Detektorauflösung, mit der der erste Projektionsdatensatz gewonnen wurde, per se eine Grenzfrequenz aufweisen, oberhalb derer keine Bildfrequenzen in den Projektionsaufnahmen enthalten sein können.

Gemäß einigen Ausführungsbeispielen der vorliegenden Erfindung wird beim Kombinieren des ersten und des vortransformierten zweiten Projektionsdatensatzes gemäß einer Kombinationsregel letztendlich eine CT-Rekonstruktion 66 erzeugt, die im ersten Bereich des Objekts die erste Auflösung und im interessierenden Objektbereich die zweite, höhere Auflösung aufweist. Gemäß dem in Fig. 6 beschriebenen Ausführungsbeispiel wird dazu zunächst ein dritter Projektionsdatensatz 80 durch eine Kombination des ersten Projektionsdatensatzes 50 und des vortransformierten zweiten Projektionsdatensatzes 58 gebildet. Wie bereits erwähnt, ist es alternativ auch möglich, die Kombination mittels einer ebenfalls vortransformierten Repräsentation des ersten Projektionsdatensatzes zu erzeugen. Wesentlich ist, dass die Kombination derart gebildet wird, dass der dritte Projektionsdatensatz in dem interessierenden Objektbereich Bildfrequenzen enthält, die sowohl oberhalb als auch unterhalb der vorbestimmten Grenzfrequenz sind, die der Vortransformation des zweiten Projektionsdatensatzes zugrunde liegt. Eine Möglichkeit, diese Kombination durchzuführen, ist eine Wavelet-Synthese des ersten Projektionsdatensatzes und des vortransformierten zweiten Projektionsdatensatzes, um zum dritten Projektionsdatensatz zu gelangen.

Die CT-Rekonstruktion 66 wird dann erhalten, indem ein CT-Rekonstruktionsalgorithmus auf den dritten Projektionsdatensatz angewendet wird.

Mit anderen Worten, werden in Fig. 6 die Projektionsdatensätze nicht durch Interpolation/Extrapolation kombiniert, sondern es werden im Projektionsdatensatz mit der hohen Vergrößerung bzw. der hohen Auflösung durch eine geeignete Filterung die hohen Frequenzen extrahiert, wobei optional zusätzlich im Projektionsdatensatz mit der geringeren Vergrößerung durch geeignete Filterung die tiefen Frequenzen extrahiert werden können. Diese hoch- und tieffrequenten Anteile können dann durch eine Wavelet-Synthese oder eine andere geeignete Maßnahme zu einer neuen Projektion 80, die alle Frequenzen in der region-of-interest (dem interessierenden Objektbereich 10) enthält, vereint werden. Die Frequenzen, die aus den einzelnen Projektionsdatensätzen extrahiert werden können bzw. sollten, werden durch die Rahmenbedingungen vorgegeben und können in weiten Grenzen frei variiert werden. Ein zu berücksichtigender Faktor kann dabei beispielsweise der Vergrößerungsfaktor sein, der sich beispielsweise daraus ergibt, dass die region-of-interest mit maximaler Vergrößerung bei gegebener Detektorgeometrie abgebildet werden soll. D.h., der Vergrößerungsfaktor stellt sicher, dass die entsprechenden Frequenzen auch tatsächlich in den Projektionen vorhanden sind. Alternativ oder zusätzlich können mehr als zwei Projektionsdatensätze, wie in Fig. 6 illustriert, gebildet und auf die äquivalente Art und Weise kombiniert werden.

Das in Fig. 6 illustrierte Verfahren hat den Vorteil, dass keine Artefakte durch numerische Interpolation/Extrapolation auftreten. Dies ist bei herkömmlichen Verfahren der Fall, bei denen die Projektionsdatensätze mit der hohen Vergrößerung lediglich basierend auf den Projektionsdatensätzen der geringen Vergrößerung fortgesetzt werden, wozu diese interpoliert werden müssen. Aufgrund der notwendigen Interpolation/Extrapolation ergibt sich bei diesen Verfahren beim Zusammenfügen der Projektionen eine numerische Ungenauigkeit. Zudem kann nicht sichergestellt werden, dass alle Frequenzen vollständig in der zusammengesetzten Projektion vorhanden sind. Dies ist jedoch für eine artefaktfreie Rekonstruktion vorteilhaft. Durch das in Fig. 6 und auch nachfolgend in Fig. 7 beschriebene Verfahren ist es jedoch sichergestellt, dass in der region-of-interest alle notwendigen Frequenzen vorhanden sind, wodurch eine artefaktfreie Rekonstruktion in der region-of-interest ermöglicht wird.

Fig. 7 zeigt ein alternatives Vorgehen zur Erzeugung einer CT-Rekonstruktion 66, die im interessierenden Objektbereich eine höhere Auflösung aufweist, als in den diesen Objektbereich umgebenden Bereichen des Objekts. Bezüglich der Erzeugung der Projektionsdatensätze und deren möglicher Vortransformation entspricht das in Fig. 7 beschriebene Verfahren dem in Fig. 6 beschriebenen Verfahren, so dass bezüglich der Beschreibung dieser Schritte auf die korrespondierende Beschreibung zur Fig. 6 verwiesen wird.

Der Unterschied besteht darin, dass basierend auf dem ersten Projektionsdatensatz und dem vortransformierten zweiten Projektionsdatensatz zunächst getrennte intermediäre CT-Rekonstruktionen erzeugt werden, die nachfolgend zu der endgültigen CT-Rekonstruktion 66 kopiert werden. D.h. mit anderen Worten, aus dem ersten Projektionsdatensatz 50 bzw. dessen vortransformierter Repräsentation 82 wird eine erste intermediäre CT-Rekonstruktion 90 erzeugt. Äquivalent dazu wird aus dem vortransformierten zweiten Projektionsdatensatz 58 eine zweite intermediäre CT-Rekonstruktion 92 erzeugt, die selbstverständlich auch in der 3-dimensionalen Repräsentation lediglich Bildfrequenzen oberhalb der vorbestimmten Grenzfrequenz aufweist. Die CT-Rekonstruktion 66 wird dann durch eine Kombination der ersten intermediären CT-Rekonstruktion 90 und der zweiten intermediären CT-Rekonstruktion 92 erhalten. Gemäß einem Ausführungsbeispiel der Erfindung erfolgt die Kombination dieser beiden intermediären CT-Rekonstruktionen 90 und 92 mittels einer Wavelet-Synthese.

D.h., das in Fig. 7 vorgeschlagene Verfahren basiert ebenfalls auf dem Verwenden unterschiedlicher Projektionsdatensätze. Dabei kann der Projektionsdatensatz mit der hohen Vergrößerung bzw. Auflösung (der zweite Projektionsdatensatz 52) so gefiltert werden, dass die daraus entstehende Rekonstruktion 92 nur noch die für eine Wavelet-Synthese notwendigen hohen Frequenzen enthält. Optional kann der Projektionsdatensatz mit der geringeren Vergrößerung so gefiltert werden, dass die daraus entstehende Rekonstruktion lediglich die für eine Wavelet-Synthese notwendigen tiefen Frequenzen enthält, sofern sich diese Eigenschaft nicht aus der endlichen Detektorauflösung selbst ergibt. Aus diesen beiden Rekonstruktionsdatensätzen kann (beispielsweise mittels einer Wavelet-Synthese) die region-of-interest artefaktfrei zusammengesetzt werden.

Das in Fig. 7 beschriebene Verfahren hat dabei beispielsweise den Vorteil, dass bei der Kombination von bereits erfolgten intermediären Rekonstruktionen für die Rekonstruktion der tiefen Frequenzen aus den Projektionen mit geringerer Auflösung weniger Projektionsaufnahmen für den Projektionsdatensatz erforderlich sind. Dies ist gerade deshalb der Fall, da zuerst intermediäre Rekonstruktionen erzeugt werden, die Kombination also nicht bereits auf Grundlage der Projektionsaufnahmen erfolgt. Verwendet man beispielsweise eine dyadische Diskretisierung, reicht es bei der geringeren Vergrößerung, lediglich halb so viele Projektionen zu messen wie bei der höheren Vergrößerung. Dies spart zum einen Messzeit und reduziert zum anderen die Strahlungsbelastung für das zu untersuchende Objekt.

Die Fig. 4 bis 7 beschreiben lediglich zwei Beispiele für eine geeignete Verknüpfung bzw. Kombination des ersten Projektionsdatensatzes und des zweiten Projektionsdatensatzes. Wie aufgrund der obigen Beschreibung offenbar wird, können auf beliebige andere Arten die Daten zweier aufeinanderfolgender Messungen mit unterschiedlichen Vergrößerungsverhältnissen innerhalb eines bestimmten Teilbereichs des Objekts kombiniert werden, um hochauflösende Bilddaten ohne Beeinträchtigung der Bildqualität zu liefern.

Mit anderen Worten ist es also möglich, mittels beliebiger anderer Methoden aus zwei oder mehreren Aufnahmen desselben Objekts mit unterschiedlicher geometrischer Vergrößerung die Rekonstruktion großer Messbereiche mit einer so hohen räumlichen Auflösung zu ermöglichen, wie sie mit einer einzelnen Messung nicht erzielt werden kann (Multi-Scan-CT, Multi-Scan ROI-CT).

Obwohl die erfindungsgemäßen Ausführungsbeispiele überwiegend im Zusammenhang mit Materialprüfungen diskutiert wurden, ist deren Anwendung auf Diagnostizierverfahren am Menschen ohne weiteres möglich. Bei der Verwendung zur zerstörungsfreien Materialprüfung kann das Verfahren insbesondere zur Inspektion großer Bauteile, die mittels beliebiger Herstellungsverfahren aus beliebigen Materialien gefertigt wurden, verwendet werden, für die in deren inneren Teilbereichen eine besonders hohe Anforderung an die bei der Prüfung wirksame Ortsauflösung gestellt wird. Als Beispiel könnte dabei die Prüfung von Leichtmetallguss-Kolben oder Turbinenschrauben für Kraftwerke oder Generatoren dienen. Die Prüfgenauigkeit wird durch das oben beschriebene Konzept stark verbessert, sowohl hinsichtlich der Sensitivität auf Risse, auf Fehlstellen und Poren als auch hinsichtlich der Spezifität bei der Trennung von richtig und falsch positiven Defektbefunden.

Darüber hinaus erlaubt es die Anwendung des erfindungsgemäßen Konzepts, zeitgleich, d. h. mit lediglich einer einzigen CT-Rekonstruktion, die weiteren Bereiche des Objekts mit einer niedrigen Ortsauflösung zu überprüfen, wobei die Prüfung mit der niedrigen Ortsauflösung gegebenenfalls durch eine weitere Überprüfung mittels eines Verfahrens geringerer Eindringtiefe ergänzt werden kann.

Abhängig von den Gegebenheiten kann das erfindungsgemäße Verfahren zur CT-Rekonstruktion eines Objekts in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren zur CT-Rekonstruktion eines Objekts ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

Gemäß einem Ausführungsbeispiel wird bei dem Verfahren zum Erzeugen des ersten Projektionsdatensatzes 20; 50 das gesamte Objekt abgebildet.

Gemäß einem bevorzugten Ausführungsbeispiel wird der dritte Projektionsdatensatz durch eine Wavelet-Synthese des ersten Projektionsdatensatzes und des vortransformierten zweiten Projektionsdatensatzes 58 erhalten.

Gemäß einem bevorzugten Ausführungsbeispiel wird gemäß der Kombinationsregel die CT-Rekonstruktion 66 aus dem dritten Projektionsdatensatz unter Verwendung eines CT-Rekonstruktionsalgorithmus erzeugt

Gemäß einem bevorzugten Ausführungsbeispiel wird bei der CT-Rekonstruktion 66 durch Kombination der ersten intermediäre CT-Rekonstruktion und der zweiten intermediäre CT-Rekonstruktion erhalten wird.

Gemäß einem bevorzugten Ausführungsbeispiel erfolgt die Kombination der ersten intermediäre CT-Rekonstruktion und der zweiten intermediäre CT-Rekonstruktion mittels einer Wavelet-Synthese.

Gemäß einem bevorzugten Ausführungsbeispiel ist die Erfassungseinrichtung 7 ausgebildet, um beim Erzeugen des ersten Projektionsdatensatzes 20; 50 das gesamte Objekt abzubilden.

**Patentansprüche**

1.  Verfahren zum Erzeugen einer CT-Rekonstruktion eines Objekts (4) mit einem hochaufgelösten interessierenden Objektbereich (10), umfassend:

    Erzeugen eines ersten Projektionsdatensatzes (20; 50) eines ersten, den interessierenden Objektbereich (10) umfassenden Bereichs (4) des Objekts mit mindestens einer ersten Projektionsaufnahme einer ersten Auflösung;
    Erzeugen eines zweiten Projektionsdatensatzes (22; 52) für den interessierenden Objektbereich (4) mit mindestens einer zweiten Projektionsaufnahme einer zweiten, höheren Auflösung;
    Vortransformieren des zweiten Projektionsdatensatzes (52), um einen vortransformierten zweiten Projektionsdatensatz (58) zu erhalten, der in dem interessierenden Objektbereich lediglich Bildfrequenzen oberhalb einer vorbestimmten Grenzfrequenz enthält, welche gleich oder größer einer durch die erste Auflösung definierten oberen Abbildungsfrequenz in dem ersten Projektionsdatensatz ist; und
    Kombinieren des ersten (20; 50) und des vortransformierten zweiten (58) Projektionsdatensatzes gemäß einer Kombinationsregel, um eine CT-Rekonstruktion (66) des ersten Bereichs des Objekts (4) mit der ersten Auflösung und des interessierenden Objektbereichs (10) mit der zweiten, höheren Auflösung zu erhalten.

2.  Verfahren gemäß dem Anspruch 1, bei dem
    der erste Projektionsdatensatz (20; 50) mit einer durch eine Relativposition eines Detektors (6) zu dem Objekt (4) gegebenen ersten Vergrößerung mittels des Detektors (6) aufgezeichnet wird; und
    der zweite Projektionsdatensatz mit einer durch eine zweite Relativposition zwischen Detektor (6) und Objekt (4) gegebenen zweiten Vergrößerung mittels des Detektors (6) erzeugt wird, wobei die zweite Vergrößerung höher ist als die erste Vergrößerung.

3.  Verfahren gemäß dem Anspruch 1, bei dem
    der erste Projektionsdatensatz (22; 52) mittels eines Detektors (6) mit einer ersten Ortsauflösung erzeugt wird; und
    der zweite Projektionsdatensatz (22; 52) mittels eines zweiten Detektors mit einer zweiten, höheren Ortsauflösung erzeugt wird.

4.  Verfahren gemäß einem der Ansprüche 1 bis 3, bei dem
    der erste Projektionsdatensatz (22; 52) mit Röntgenstrahlung einer ersten Röntgenenergie erzeugt wird; und
    der zweite Projektionsdatensatz (22; 52) mit Röntgenstrahlung einer zweiten Röntgenenergie erzeugt wird, deren Energie derart vorbestimmt ist, dass die Röntgenabsorption des Materials des Objekts (4) bei Verwendung der zweiten Röntgenenergie zu einer Projektionsaufnahme führt, deren Kontrast größer oder kleiner ist als der Kontrast der ersten Projektionsaufnahme.

5.  Verfahren gemäß einem der vorhergehenden Ansprüche, bei dem beim Kombinieren aus dem ersten Projektionsdatensatz und dem vortransformierten zweiten Projektionsdatensatz (58) ein dritter Projektionsdatensatz des den interessierenden Objektbereich umfassenden Bereichs erzeugt wird, der in dem interessierenden Objektbereich Bildfrequenzen oberhalb und unterhalb der vorbestimmten Grenzfrequenz enthält.

6.  Verfahren gemäß einem der Ansprüche 1 bis 4, bei dem beim Kombinieren gemäß der Kombinationsregel aus dem ersten Projektionsdatensatz (20; 50) eine erste intermediäre CT-Rekonstruktion und aus dem vortransformierten zweiten Projektionsdatensatz (20; 50) eine zweite intermediäre CT-Rekonstruktion unter Verwendung eines CT-Rekonstruktionsalgorithmus erzeugt wird.

7. Verfahren gemäß einem der vorhergehenden Ansprüche, bei dem der durch die Vortransformation erzeugte vortransformierte zweite Projektionsdatensatz (58) zu einer Wavelet-Darstellung einer CT-Rekonstruktion (62) des interessierenden Objektbereichs korrespondiert.

8. Verfahren gemäß einem der vorhergehenden Ansprüche, zusätzlich umfassend:

Erzeugen eines oder mehrerer weiterer Projektionsdatensätze mit höherer Auflösung als die erste Auflösung für einen oder mehrere weitere interessierende Objektbereiche; und
Kombinieren des ersten und des oder der mehreren weiteren Projektionsdatensätze gemäß der Kombinationsregel.

9. Vorrichtung zum Erzeugen einer CT-Rekonstruktion eines Objekts (4) mit einem hochaufgelösten interessierenden Objektbereich (10), umfassend:

eine Erfassungseinrichtung (7), die ausgebildet ist um
einen ersten Projektionsdatensatz (20; 50) eines ersten, den interessierenden Objektbereich (10) umfassenden Bereichs (4) des Objekts mit mindestens einer ersten Projektionsaufnahme einer ersten Auflösung; und
eine zweiten Projektionsdatensatz (22; 52) eines interessierenden Objektbereichs (4) mit mindestens einer zweiten Projektionsaufnahme einer zweiten, höheren Auflösung, zu erzeugen; und
eine Kombinationseinrichtung (8), die ausgebildet ist, ein Vortransformieren des zweiten Projektionsdatensatzes (52) vorzunehmen, um einen vortransformierten zweiten Projektionsdatensatz (58) zu erhalten, der in dem interessierenden Objektbereich lediglich Bildfrequenzen oberhalb einer vorbestimmten Grenzfrequenz enthält, welche gleich oder größer einer durch die erste Auflösung definierten oberen Abbildungsfrequenz in dem ersten Projektionsdatensatz ist, und um den ersten (20; 50) und den vortransformierten zweiten Projektionsdatensatz gemäß einer Kombinationsregel zu Kombinieren, um eine CT-Rekonstruktion (66) des ersten Bereichs (4) des Objekts mit der ersten Auflösung und des interessierenden Objektbereichs (10) mit der zweiten, höheren Auflösung zu erhalten.

10. Vorrichtung gemäß dem Anspruch 9, bei der die Erfassungseinrichtung (7) derart ausgebildet ist, dass
der erste Projektionsdatensatz (20; 50) mit einer durch eine Relativposition eines Detektors (6) zu dem Objekt (4) gegebenen ersten Vergrößerung mittels des Detektors (6) aufgezeichnet wird; und
der zweite Projektionsdatensatz mit einer durch eine zweite Relativposition zwischen Detektor (6) und Objekt (4) gegebenen zweiten Vergrößerung mittels des Detektors (6) erzeugt wird, wobei die zweite Vergrößerung höher ist als die erste Vergrößerung.

11. Vorrichtung gemäß de Anspruch 9, bei der die Erfassungseinrichtung (7) derart ausgebildet ist, dass
der erste Projektionsdatensatz (22; 52) mittels eines Detektors (6) mit einer ersten Ortsauflösung erzeugt wird; und
der zweite Projektionsdatensatz (22; 52) mittels eines zweiten Detektors mit einer zweiten, höheren Ortsauflösung erzeugt wird.

12. Vorrichtung gemäß einem der Ansprüche 9 bis 11, bei der die Erfassungseinrichtung (7) derart ausgebildet ist, dass
der erste Projektionsdatensatz (22; 52) mit Röntgenstrahlung einer ersten Röntgenenergie erzeugt wird; und
der zweite Projektionsdatensatz (22; 52) mit Röntgenstrahlung einer zweiten Röntgenenergie erzeugt wird, deren Energie derart vorbestimmt ist, dass die Röntgenabsorption des Materials des Objekts (4) bei Verwendung der zweiten Röntgenenergie zu einer Projektionsaufnahme führt, deren Kontrast größer oder kleiner ist als der Kontrast der ersten Projektionsaufnahme.

13. Vorrichtung gemäß einem der Ansprüche 9 bis 12, bei der die Kombinationseinrichtung (8) derart ausgebildet ist, dass die durch die Vortransformation erzeugte vortransformierte zweite Projektionsaufnahme (58) zu einer Wavelet-Darstellung einer CT-Rekonstruktion (62) des interessierenden Objektbereichs korrespondiert.

14. Vorrichtung gemäß einem der Ansprüche 9 bis 13, bei der die Erfassungseinrichtung (7) derart ausgebildet ist, um einen oder mehrere weiterer Projektionsdatensätze mit höherer Auflösung als die zweite Auflösung für einen oder mehrere weitere interessierende Objektbereiche zu erzeugen.

15. Computerprogramm mit einem Programmcode zur Durchführung des Verfahrens nach einem der Ansprüche 1 bis 8, wenn das Programm auf einem Computer abläuft.

**Claims**

1. A method of producing a CT reconstruction of an object (4) comprising a high-resolution object region (10) of interest, the method comprising:

   producing a first projection data set (20; 50) of a first region (4) of the object that encloses the object region (10) of interest and comprises at least one first projection recording of a first resolution;
   producing a second projection data set (22; 52) for the object region of interest (4) that comprises at least one second projection recording of a second, higher resolution;
   pre-transforming the second projection data set (52) to obtain a pre-transformed second projection data set (58) containing, within the object region of interest, only image frequencies above a predetermined cutoff frequency, which is equal to or greater than an upper imaging frequency, defined by the first resolution, within the first projection data set; and
   combining the first (20; 50) and the pre-transformed second (58) projection data sets in accordance with a combination rule so as to obtain a CT reconstruction (66) of the first region of the object (4) comprising the first resolution, and of the object region (10) of interest comprising the second, higher resolution.

2. The method as claimed in claim 1, wherein
   the first projection data set (20; 50) comprising a first magnification defined by a relative position between a detector (6) and the object (4) is recorded by means of the detector (6); and
   the second projection data set comprising a second magnification defined by a second relative position between the detector (6) and the object (4) is produced by means of the detector (6), the second magnification being higher than the first magnification.

3. The method as claimed in claim 1, wherein
   the first projection data set (22; 52) is produced by means of a detector (6) with a first spatial resolution; and
   the second projection data set (22; 52) is produced by means of a second detector with a second, higher spatial resolution.

4. The method as claimed in any of claims 1 to 3, wherein
   the first projection data set (22; 52) is produced with X-radiation of a first X-ray energy; and
   the second projection data set (22; 52) is produced with X-radiation of a second X-ray energy, the energy of which is predetermined such that the X-ray absorption of the material of the object (4) leads, when using the second X-ray energy, to a projection recording whose contrast is larger or smaller than the contrast of the first projection recording.

5. The method as claimed in any of the previous claims, wherein in combining, a third projection data set of the region enclosing the object region of interest is produced from the first projection data set and the pre-transformed second projection data set (58), said region enclosing the object region of interest containing, within the object region of interest, image frequencies above and below the predetermined cutoff frequency.

6. The method as claimed in any of claims 1 to 4, wherein in combining, in accordance with the combination rule, a first intermediate CT reconstruction is produced from the first projection data set (20; 50), and a second intermediate CT reconstruction is produced from the pre-transformed second projection data set (20; 50) while using a CT reconstruction algorithm.

7. The method as claimed in any of the previous claims, wherein the pre-transformed second projection data set (58) produced by the pre-transformation corresponds to a wavelet representation of a CT reconstruction (62) of the object region of interest.

8. The method as claimed in any of the previous claims, additionally comprising:

   producing one or more further projection data sets comprising a higher resolution than the first resolution for one or more further object regions of interest; and
   combining the first and the one or several further projection data sets in accordance with the combination rule.

9. A device for producing a CT reconstruction of an object (4) comprising a high-resolution object region (10) of interest, the method comprising:

a detection means (7) configured to

produce a first projection data set (20; 50) of a first region (4) of the object that encloses the object region (10) of interest and comprises at least one first projection recording of a first resolution;

produce a second projection data set (22; 52) of an object region (4) of interest comprising at least a second projection recording of a second, higher resolution; and

a combination means (8) configured to pre-transform the second projection data set (52) to obtain a pre-transformed second projection data set (58) containing, within the object region of interest, only image frequencies above a predetermined cutoff frequency, which is equal to or greater than an upper imaging frequency, defined by the first resolution, within the first projection data set, and to combine the first (20; 50) and the pre-transformed second projection data sets in accordance with a combination rule so as to obtain a CT reconstruction (66) of the first region (4) of the object comprising the first resolution, and of the object region (10) of interest comprising the second, higher resolution.

10. The device as claimed in claim 9, wherein the detection means (7) is configured such that

the first projection data set (20; 50) comprising a first magnification defined by a relative position between a detector (6) and the object (4) is recorded by means of the detector (6); and

the second projection data set comprising a second magnification defined by a second relative position between the detector (6) and the object (4) is produced by means of the detector (6), the second magnification being higher than the first magnification.

11. The device as claimed in claim 9, wherein the detection means (7) is configured such that

the first projection data set (22; 52) is produced by means of a detector (6) with a first spatial resolution; and

the second projection data set (22; 52) is produced by means of a second detector with a second, higher spatial resolution.

12. The device as claimed in any of claims 9 to 11, wherein the detection means (7) is configured such that

the first projection data set (22; 52) is produced with X-radiation of a first X-ray energy; and

the second projection data set (22; 52) is produced with X-radiation of a second X-ray energy, the energy of which is predetermined such that the X-ray absorption of the material of the object (4) leads, when using the second X-ray energy, to a projection recording whose contrast is larger or smaller than the contrast of the first projection recording.

13. The device as claimed in any of claims 9 to 12, wherein the combination means (8) is configured such that the pre-transformed second projection recording (58) produced by the pre-transformation corresponds to a wavelet representation of a CT reconstruction (62) of the object region of interest.

14. The device as claimed in any of claims 9 to 13, wherein the detection means (7) is configured to produce one or more further projection data sets comprising a higher resolution than the second resolution for one or more further object regions of interest.

15. A computer program comprising a program code for performing the method as claimed in any of claims 1 to 8, when the program runs on a computer.

**Revendications**

1. Procédé pour générer une reconstruction tomographique d'un objet (4) avec une zone d'objet (10) intéressante à haute résolution, comprenant:

générer un premier ensemble de données de projection (20; 50) d'une première zone (4) de l'objet comprenant la zone d'objet intéressante (10) avec au moins une première prise de projection d'une première résolution;

générer un deuxième ensemble de données de projection (22; 52) pour la zone d'objet intéressante (4) avec au moins une deuxième prise de projection d'une deuxième résolution supérieure;

prétransformer le deuxième ensemble de données de projection (52), pour obtenir un deuxième ensemble de données de projection prétransformé (58) qui, dans la zone d'objet intéressante ne contienne que des fréquences d'images au-dessus d'une fréquence limite prédéterminée qui est égale ou supérieure à une fréquence de reproduction supérieure définie par la première résolution dans le premier ensemble de données de production; et

combiner le premier (20; 50) et le deuxième ensemble de données de projection prétransformé (58) selon une règle de combinaison, pour obtenir une reconstruction tomographique (66) de la première zone de l'objet (4) avec la première résolution et de la zone d'objet intéressante (10) à la deuxième résolution supérieure.

2. Procédé selon la revendication 1, dans lequel
le premier ensemble de données de projection (20; 50) est enregistré au moyen du détecteur (6) avec un premier agrandissement donné par une position relative d'un détecteur (6) par rapport à l'objet (4); et
le deuxième ensemble de données de projection est généré au moyen du détecteur (6) avec un deuxième agrandissement donné par une deuxième position relative entre le détecteur (6) et l'objet (4), le deuxième agrandissement étant supérieur au premier agrandissement.

3. Procédé selon la revendication 1, dans lequel
le premier ensemble de données de projection (22; 52) est généré au moyen d'un détecteur (6) avec une première résolution locale; et
le deuxième ensemble de données de détection (22; 52) est généré au moyen d'un deuxième détecteur avec une deuxième résolution locale supérieure.

4. Procédé selon l'une de revendications 1 à 3, dans lequel
le premier ensemble de données de projection (22; 52) est généré par un rayonnement X d'une première énergie de rayons X; et
le deuxième ensemble de données de projection (22; 52) est généré par un rayonnement X d'une deuxième énergie de rayons X dont l'énergie est prédéterminée de sorte que l'absorption de rayons X du matériau de l'objet (4) conduit, en cas d'utilisation de la deuxième énergie de rayons X, à une prise de projection dont le contraste est supérieur ou inferieur au contraste de la première prise de projection.

5. Procédé selon l'une des revendications précédentes, dans lequel est généré, lors de la combinaison, à partir du premier ensemble de données de projection et du deuxième ensemble de données de projection prétransformé (58), un troisième ensemble de données de projection de la zone comprenant la zone d'objet intéressante qui contient, dans la zone d'objet intéressante, des fréquences d'images au-dessous et au-dessus de la fréquence limite prédéterminée.

6. Procédé selon l'une des revendications 1 à 4, dans lequel est généré, lors de la combinaison selon la règle de combinaison, à partir du premier ensemble de données de projection (20; 50), une première reconstruction tomographique intermédiaire et, à partir du deuxième ensemble de données de projection prétransformé (20; 50), une deuxième reconstruction tomographique intermédiaire à l'aide d'un algorithme de reconstruction tomographique.

7. Procédé selon l'une des revendications précédentes, dans lequel le deuxième ensemble de données de projection prétransformé (58) généré par la prétransformation correspond à une représentation d'ondelettes d'une reconstruction tomographique (62) de la zone d'objet intéressante.

8. Procédé selon l'une des revendications précédentes, comprenant en outre:

générer un ou plusieurs autres ensembles de données de projection à résolution supérieure à la première résolution pour une ou plusieurs autres zones d'objet intéressantes; et
combiner le premier ou les plusieurs autres ensembles de données de projection selon la règle de combinaison.

9. Dispositif pour générer une reconstruction tomographique d'un objet (4) avec une zone d'objet intéressante à autre résolution (10), comprenant:

un dispositif de détection (7) qui est réalisé pour
générer un premier ensemble de données de projection (20; 50) d'une premier zone (4) de l'objet comprenant la zone d'objet intéressante (10) avec au moins une première prise de projection d'une première résolution; et
un deuxième ensemble de données de projection (22; 52) d'une zone d'objet intéressante (4) avec au moins une deuxième prise de projection d'une deuxième résolution supérieure; et
un moyen de combinaison (8) qui est réalisé pour procéder à une prétransformation du deuxième ensemble de données de projection (52), pour obtenir un deuxième ensemble de données de projection prétransformé (58) qui contient, dans la zone d'objet intéressante, uniquement des fréquences d'images au-dessus d'une fréquence limite prédéterminée qui est égale ou supérieure à une fréquence de reproduction supérieure définie par la première résolution dans le premier ensemble de données de projection, et pour combiner le premier ensemble de données de projection (20; 50) et le deuxième ensemble de données de projection prétransformé selon une règle de combinaison, pour obtenir une reconstruction tomographique (66) de la première zone (4) de l'objet à la première résolution et de la zone d'objet intéressante (10) à la deuxième résolution supérieure.

10. Dispositif selon la revendication 9, dans lequel le moyen de détection (7) est réalisé de sorte que le premier ensemble de données de projection (20; 50) est enregistré au moyens du détecteur (6) avec un premier agrandissement donné par une position relative d'un détecteur (6) par rapport à l'objet (4); et le deuxième ensemble de données de projection est généré au moyen du détecteur (6) avec un deuxième agrandissement donné par une deuxième position relative entre le détecteur (6) et l'objet (4), le deuxième agrandissement étant supérieur au premier agrandissement.

11. Dispositif selon la revendication 9, dans lequel le moyen de détection (7) est réalisé de sorte que le premier ensemble de données de projection (22; 52) soit généré au moyen d'un détecteur (6) avec une première résolution locale; et le deuxième ensemble de données de projection (22; 52) soit généré au moyen d'un deuxième détecteur avec une deuxième résolution locale supérieure.

12. Dispositif selon l'une des revendications 9 à 11, dans lequel le moyen de détection (7) est réalisé de sorte que le premier ensemble de données de projection (22 ;52) soit généré par rayonnement X d'une première énergie de rayons X; et le deuxième ensemble de données de projection (22; 52) soit généré par rayonnement X d'une deuxième énergie de rayons X dont l'énergie est prédéterminée de sorte que l'absorption de rayons X du matériau de l'objet (4) conduise, en cas d'utilisation de la deuxième énergie de rayons X, à une prise de projection dont le contraste est supérieur ou inferieur au contraste de la première prise de projection

13. Dispositif selon l'une des revendications 9 à 12, dans lequel le moyen de combinaison (8) est réalisé de sorte que la deuxième prise de projection prétransformée (58) générée par la prétransformation corresponde à une représentation d'ondelettes d'une reconstruction tomographique (62) de la zone d'objet intéressante.

14. Dispositif selon l'une des revendications 9 à 13, dans lequel le moyen de détection (7) est réalisé de manière à générer un ou plusieurs autres ensembles de données de projection à résolution supérieure à la deuxième résolution pour une ou plusieurs autres zones d'objet intéressantes.

15. Programme d'ordinateur avec un code de programme pour réaliser le procédé selon l'une des revendications 1 à 8 lorsque le programme est exécuté sur un ordinateur.

FIGUR 1

17

FIGUR 2A

b

$a_1$

4

6 12

W Drehzentrum

2

FIGUR 2B

b

$a_2$

10

2

Bereich der
hochauflösenden
Rekonstruktion

6

12

Drehzentrum

4

7

8 Kombinationseinrichtung

**FIGUR 3**

Rekonstruktion

## FIGUR 4

FIGUR 5

Projektionen mit niedriger Auflösung, Objekt kann komplett auf dem Detektor abgebildet werden

50

Projektionen mit hoher Auflösung, Objekt kann nicht komplett auf dem Detektor abgebildet werden, nur die Region-of-Interest kann komplett auf dem Detektor abgebildet werden

52

Tiefpass-filterung

Hochpass-filterung

70

tiefpassgefilterte Projektionen

82

hochpassgefilterte Projektionen

58

Wavelet-Synthese (Hoch- und Tiefpassanteile werden geeignet kombiniert)

Projektionen mit allen notwendigen Frequenzen in der Region-of-Interest

80

Re-kon-struk-tion

Rekonstruktion mit artefaktfreier Region-of-Interest

66

FIGUR 6

FIGUR 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060262118 A